# EUROPEAN PATENT SPECIFICATION

(11) **EP 1 836 889 B1**
(45) Date of publication and mention of the grant of the patent: **10.02.2010**
(21) Application number: 07251204.9
(22) Date of filing: 21.03.2007
(51) Int. Cl.: A01D 17/00, A01D 17/02, A01D 17/04, A01D 17/06, A01D 33/04, A01B 27/00

(54) **Soil cultivation and stone/clod separation**
Bodenbearbeitung und Stein/Klumpentrennung
Culture de la terre et séparation pierres/mottes de terre

(30) Priority: 22.03.2006 GB 0605726
(43) Date of publication of application: 26.09.2007
(73) Proprietor: Weston, David Booth, Boston, Lincs, PE20 1LY (GB); Troop, Richard James, Everton, near Doncaster, South Yorks DN10 5AR (GB)
(72) Inventor: Weston, David Booth, Boston, Lincs, PE20 1LY (GB); Troop, Richard James, Everton, near Doncaster, South Yorks DN10 5AR (GB)
(74) Representative: Orr, Robert

(56) References cited:
- EP-A1- 1 332 656
- EP-A2- 0 410 808
- WO-A-94/09612
- DE-A1- 2 749 558
- DE-A1- 19 947 484
- DE-C1- 4 339 510
- FR-A- 480 251
- GB-A- 2 145 612

## Description

The present invention relates to a soil cultivator. The present invention also relates to a combined soil cultivator/and stone and clod separator, and to a method of cultivating soil and/or separating stones/clods. In particular, but not exclusively, the present invention relates to a combined soil cultivator and stone/clod separator comprising at least one soil crumbling assembly.

Stone and clod separators and cultivators are used in agriculture and horticulture to produce fine soil conditions free of large clods of soil and stones, in preparation for the planting of, for example, vegetables such as potatoes. This often requires a number of passes of a cultivator/separator and successive operations of the cultivator/separator in order to sufficiently break down heavy soils.

European Patent Publication Number 0410808 (Richard Pearson Limited) and European Patent Publication Number 1332656 (Reekie Manufacturing Limited) disclose a prior proposed lifting conveyor and agricultural separator, and a soil cultivator, respectively. Whilst the lifting conveyor/separator of EP 0410808 and the soil cultivator of EP 1332656 are effective in, respectively, lifting and separating a root crop, bulbs or stones/clods and in cultivating soil, it is generally desired to improve upon the structures and operation of such known equipment.

UK Patent Publication Number 2145612 (Richard Pearson Limited) discloses a device for separating clod and/or stones from root vegetables or bulbs. According to GB2145612, a prior art harvester is disclosed which has digging shares, first and second open webs and a further web which is at right angles to the first and second webs and delivers potatoes, clod and stone on to an elevator. The harvester is modified by replacing the further web with a separating device. The separating device comprises three driven rotatable members, two of which comprise a plurality of axially spaced star wheels, The other rotatable member is in the form of a clod roller. The star wheels serve to loosen clod and small pieces of clod are wound therebetween. The potatoes, remaining clod and stones are then fed to the clod roller, and most of the remaining clod and smaller stones are drawn between one of the rotatable members and the clod roller.

French Patent Publication Number 480251 (Faarborg) discloses a machine for harvesting potatoes. The machine includes a spade or blade and a first conveyor positioned behind the blade. The first conveyor transports the potatoes towards the back of the machine where they fall on to a second elevator. A transverse conveyor is positioned below the second conveyor.

It is amongst the objects of at least one embodiment of the present invention to obviate or mitigate disadvantages associated with prior soil cultivators and/or stone and clod separators.

It is also amongst the objects of at least one embodiment of the present invention to provide a soil separating, cultivating device capable of producing sufficiently clod free soil conditions whilst minimising preparatory soil cultivations, resulting in increased speed of operation, reduced overall power requirement and less damage to soil structure.

It is a further object of at least one embodiment of the present invention to provide a clod and stone separator which sieves loose soil more effectively.

According to a first aspect of the present invention, there is provided a soil cultivator comprising:
a digging device;
a first soil sieving conveyor;
at least one soil crumbling assembly; and
at least one further soil sieving conveyor;
wherein the digging device is arranged to dig up material and to transfer the material rearwardly, relative to a direction of travel, to the first soil sieving conveyor; and
wherein the at least one soil crumbling assembly is positioned downstream of the first sieving conveyor, for receiving material from the first soil sieving conveyor; **characterised in that** the at least one further soil sieving conveyor is positioned to receive substantially all of the material passing down through the at least one soil crumbling assembly.

It will be understood that the material which the digging device digs up and transfers to the first soil sieving conveyor comprises soil particles and clods or clod material of various sizes, as well as stones of varying sizes.

The cultivator may be a combined soil cultivator and stone/clod separator. The invention may provide a combined soil cultivator and stone/clod separator which exerts a combined cultivating and stone/clod separating action on soil in a single pass across the surface of a field or the like. This avoids or at least minimises a requirement to carry out separate stone/clod separating and cultivating operations, when compared with prior equipment.

The at least one further soil sieving conveyor may also be positioned to receive substantially all of the material delivered rearwardly from the at least one soil crumbling assembly.

Preferably, the first soil sieving conveyor is arranged to carry out a sieving action on material transferred to the conveyor by the digging device, and may be arranged to transfer material above a first size along a length of the conveyor for discharge onto or into the soil crumbling assembly. Thus the first soil sieving conveyor may be arranged to allow material below said first size to fall down through the conveyor back to the ground, effectively carrying out a sieving action on the material. It will therefore be understood that stones and clods which are oversized are prevented from falling down through the first soil sieving conveyor to the ground, and are discharged onto or into the soil crumbling assembly for further working. The first soil sieving conveyor may define a plurality of sieving spaces, the dimensions of each sieving space determining the maximum, first size of material permitted to fall down through the conveyor. The first soil sieving conveyor may be arranged to transfer or transport material which is oversized relative to the dimensions of said sieving spaces along a length of the first soil sieving assembly, and to discharge said material onto or into the at least one soil crumbling assembly. The first soil sieving conveyor may be configured such that, during passage of oversized material along the length of the conveyor, the oversized material is at least partially broken down or crumbled, such that a portion of the oversized material is broken down and falls down through the conveyor before it reaches the end thereof.

Preferably also, the at least one soil crumbling assembly is arranged to exert a crumbling action on clods received from the first soil sieving conveyor, to break-down or crumble the clods to a smaller size. The at least one soil crumbling assembly may also be arranged to permit clods/stones below a second size, larger than said first size of material permitted to fall down through the first soil sieving conveyor, to pass down through the assembly. The at least one soil crumbling assembly may define a plurality of sieving spaces, the dimensions of each space determining the maximum, second size of material passing down through the assembly, and may be arranged to exert a crumbling action on clods which are oversized relative to the sieving spaces, to break-down or crumble the clods. Additionally, the soil crumbling assembly may define an opening for each sieve space through which material to be crumbled is received, and the openings may be sized to prevent entry of material above a third size, greater than said second size. Clod material above said third size will typically be broken down by the soil crumbling assembly to a smaller size, through repeated impact of the soil crumbling assembly against the clods, such that the clod material can subsequently pass into the openings and down through the soil crumbling assembly. However, excessively large clods may be transferred along a length of the assembly and discharged from the assembly. Other, harder material above said third size, such as stones or rocks, may be transferred along a length of the assembly and discharged from the assembly. In this fashion, large clods/stones which are oversized relative to the openings and thus too large to be handled by the soil crumbling assembly may be discharged from the assembly.

It will be understood that the soil crumbling assembly is positioned downstream of the first soil sieving conveyor in that it is positioned so as to receive material discharged from, optionally, an end of said conveyor. The soil crumbling assembly is preferably located rearwardly of the first soil sieving conveyor, relative to the direction of travel, and is preferably also positioned such that a main plane or axis of the soil crumbling assembly is on the same plane or coaxial with a main plane or axis of the first soil sieving conveyor.

The at least one further soil sieving conveyor may be arranged to exert a further sieving action on material passing down through and delivered rearwardly from the at least one soil crumbling assembly, and may be arranged to transfer material above said first size along a length of the conveyor for discharge. Preferably, the at least one further soil sieving conveyor is arranged to discharge material above the first size on to a discharge device such as a lateral conveyor, which may be adapted to discharge the material into wheel ruts formed during passage of the cultivator. Alternatively, the material may be collected and removed off-site. It will therefore be understood that material which is broken-down or crumbled by the soil crumbling assembly to a size above said first size may be transferred along the at least one further soil sieving conveyor, whilst material broken-down or crumbled to a size below said first size may fall down through the conveyor to the ground, as described above with respect to the first soil sieving conveyor. Furthermore, during passage of the material above said first size along the at least one further soil sieving conveyor, at least a portion of the material may be further broken down and may fall through the at least one further soil sieving conveyor prior to discharge from the end of the conveyor.

Providing a cultivator having two such sets of conveyors and a soil crumbling assembly enables crumbling of oversized clods and, optionally, stone separation without hampering or negating work previously carried out by the first soil sieving conveyor. This is because the further conveyor receives substantially all of the material passing down through and discharged rearwardly from the soil crumbling assembly, and effectively performs a grading action of the material output from the soil crumbling assembly.

In a preferred embodiment of the invention, the first and at least one further soil sieving conveyors each comprise a plurality of rotatable members spaced apart with respect to the direction of travel. Each rotatable member may comprise a plurality of generally parallel star wheels. Each star wheel may comprise a plurality of fingers and may be shaped to rotate material in an opposite direction to a direction of rotation of the star wheels. In an alternative embodiment, the first and at least one further soil sieving conveyor may comprise a web defining a plurality of discharge apertures, the web taking the form of an endless belt.

In a preferred embodiment, the soil crumbling assembly comprises a plurality of generally parallel star wheel members spaced apart with respect to the direction of travel, each rotatably mounted on a frame of the cultivator and stone/clod separator.

Each rotatable member may comprise a row of star wheels having outwardly extending fingers. The star wheels of adj acent rows may cooperate to define sieving spaces therebetween through which soil particles can pass downwardly, and the fingers of each star wheel of one row of star wheels may cooperate with the fingers of a corresponding star wheel of an adjacent row in order to exert a combined working action on soil particles and clod material which is oversized relative to said sieving spaces, in order to break-down or crumble such material prior to discharge from the assembly.

In embodiments of the invention, the cultivator may comprise a further soil crumbling assembly and a further soil sieving conveyor. The cultivator may therefore comprise a first soil crumbling assembly positioned downstream of the first soil sieving conveyor; a second soil sieving conveyor positioned to receive substantially all of the material passing down through and delivered rearwardly from the first soil crumbling assembly; a second soil crumbing assembly positioned downstream of the second soil sieving conveyor, for receiving material from the second soil sieving conveyor; and a third soil sieving conveyor positioned to receive substantially all of the material passing down through and delivered rearwardly from the second soil crumbling assembly.

It will therefore be understood that a two-stage crumbling action may be exerted on dug-up material, enhancing the crumbling-separating action. This may further reduce the number of passes or operations of the cultivator required in order to achieve a satisfactory result.

The first soil crumbling assembly may be arranged to carry out a first crumbling of the material and the second soil crumbling assembly to carry out a second, finer crumbling of the material. Accordingly, sieving spaces of the second crumbling assembly may be smaller than those defined by the first soil crumbling assembly.

The digging device may comprise a share blade or the like and a conveyor such as a roller, for digging-up and transferring material to the first soil sieving conveyor. Alternatively, any other suitable digging device may be utilised.

The cultivator may comprise a frame on which the digging device, first soil sieving conveyor, at least one soil crumbling assembly, and at least one further soil sieving conveyor are mounted, movement of the frame along or relative to the surface of a field or the like causing the digging device to dig up material to be transferred to the first soil sieving conveyor.

The first soil sieving conveyor may define the or a soil crumbling assembly. This may be achieved by forming the first soil sieving conveyor from a plurality of star wheel arrays defining a soil sieving portion and a soil crumbling portion, and by spacing star wheel arrays of the soil crumbling portion so as to define soil sieving spaces larger than soil sieving spaces defined by star wheel arrays of the soil sieving portion.

According to a second aspect of the present invention, there is provided a method of cultivating soil and separating stones/clods, the method comprising the steps of:
digging-up material to be cultivated and from which stones and clods are to be separated and transferring the dug-up material on to a first soil sieving conveyor; activating the first soil sieving conveyor to transfer the material to a soil crumbling assembly positioned downstream of the first sieving conveyor;
activating the at least one soil crumbling assembly; discharging substantially all of the material passing down through the at least one soil crumbling assembly onto an at least one further soil sieving conveyor.

Material delivered rearwardly from the at least one soil crumbling assembly may also be discharged on to the at least one further soil sieving conveyor. However, in an alternative, a barrier may be formed to encourage material to pass down through the soil crumbling assembly.

Activating the first soil sieving conveyor both transfers material to the soil crumbling assembly and sieves the material, such that material below a size defined by sieving spaces of the conveyor passes down through the conveyor. It will be understood that the further conveyor carries out a similar sieving operation.

The soil conveyor, the soil crumbling assembly and the further soil sieving conveyor may each consist of a series of star wheel rotatable members. The soil sieving conveyor and the further soil sieving conveyor may both consist of a web type soil sieving conveyor.

The soil sieving conveyors act, in use, to sieve out and thus separate stones/clods from soil dug up by the digging device.

The first and further soil sieving conveyors may define respective soil sieving spaces, and the dimensions of the soil sieving spaces of the first soil sieving conveyor may be larger than the dimensions of the soil sieving spaces of the further soil sieving conveyor.

One or both of the soil sieving conveyors may comprise a plurality of arrays of spaced star wheels, or one or both of the soil sieving conveyors may comprise a web defining a plurality of discharge apertures, the web taking the form of an endless belt.

The at least one further soil sieving conveyor may also be positioned to receive substantially all of the material delivered rearwardly from the first soil sieving conveyor.

The further soil sieving conveyor may be positioned such that a substantial part of the further conveyor overlaps the first conveyor. In this fashion, a large part of the material sieved by the first conveyor may fall on to the further conveyor, where the material may be further sieved.

The separator may comprise the first soil sieving conveyor; a second soil sieving conveyor positioned to receive material passing downwardly through the first soil sieving conveyor, for carrying out a second sieving action on the soil; and a third soil sieving conveyor positioned to receive material passing downwardly through the second soil sieving conveyor, for carrying out a third sieving action on the soil. The second and third soil sieving conveyors may define respective soil sieving spaces, and the dimensions of the soil sieving spaces of the second soil sieving conveyor may be larger than the dimensions of the soil sieving spaces of the third soil sieving conveyor. The third soil sieving conveyor may be positioned such that a substantial part of the third conveyor overlaps the second conveyor. In this fashion, a large part of the material sieved by the second conveyor may fall on to the third conveyor, where the material may be further sieved.

Stones and/or clods which are oversized and do not pass down through either the first or further soil sieving conveyors may be discharged from an end of the further conveyor, and may be collected for disposal or discharged into wheel ruts formed during the separating process.

Embodiments of the invention will now be described, by way of example only, with reference to the accompanying drawings, in which:
Figure 1 shows in diagrammatic side view a soil cultivator and stone/clod separator, in accordance with an embodiment of the present invention;
Figure 2 shows in diagrammatic side view a soil cultivator and stone/clod separator, in accordance with an alternative embodiment of the present invention;
Figure 3 shows in diagrammatic side view a soil cultivator and stone/clod separator, in accordance with a further alternative embodiment of the present invention; and
Figure 4 shows in diagrammatic side view a stone and clod separator, in accordance with a further alternative embodiment of the present invention.

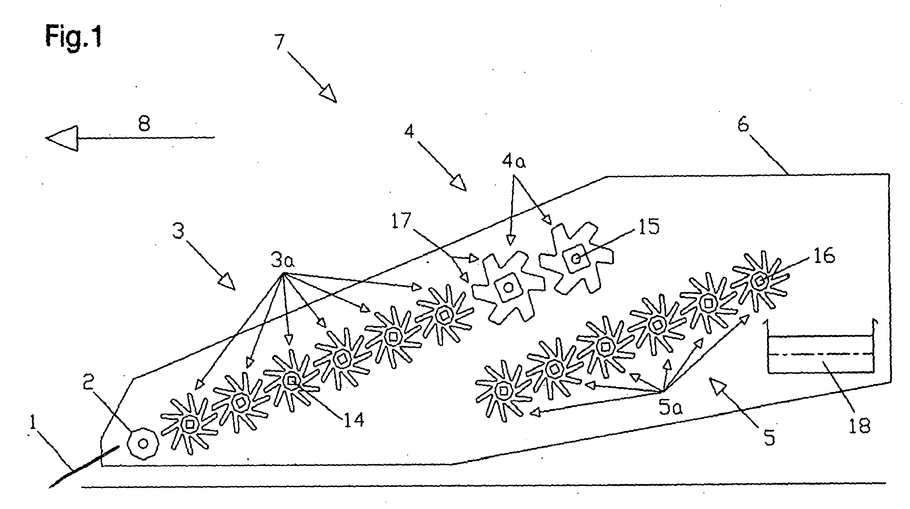

In Figure 1 a preferred embodiment of soil cultivator and stone/clod separator according to the invention is shown, and is designated generally by reference numeral 7. The soil cultivator and stone/clod separator 7 has a frame 6 which is pulled forwardly in the direction of arrow 8, in order to dig up soil via a share blade 1 and a conveying roller 2 which transfers material rearwardly to soil sieving conveyor 3, soil crumbling means 4 and a further soil sieving conveyor 5.

The sieving action of conveyor 3 allows fine soil particles and small clods to fall back to the ground and delivers oversize clods to the downstream soil crumbling means 4 to be broken down into further fine soil particles and small clods, which are then delivered onto the surface of the further soil sieving conveyor 5.

The soil sieving conveyor 3, the soil crumbling device 4 and the further soil sieving conveyor 5 each consist of a series of arrays of rotatable star wheel members 3a, 4a and 5a, respectively. The star wheel members 3a, 4a and 5a in each array are mounted spaced along respective shafts 14, 15 and 16, by which the star wheel members are driven and rotated. The rotatable members 4a of the soil crumbling device 4 have star wheels which, by design or spacing, in order to facilitate effective crumbling of oversize clods of soil, could not be used in the sieving conveyors 3 or 5 without allowing oversize material to fall back onto the ground. The background use of star wheel rotatable members for soil sieving and soil cultivation, and the construction and arrangement of such star wheel members, are described in detail in EP 0410808 and in EP 1332656, and the star wheel members in the soil sieving conveyors 3, 5 and the soil crumbling device 4 are constructed, arranged and operated in a similar fashion. Indeed, it will be understood that the star wheels 3a, 4a and 5a of the arrays 3, 4 and 5 are spaced along lengths of their respective shafts 14, 15 and 16 to define sieving spaces between the adjacent star wheels on the shafts, and the star wheels on the adjacent shafts. The dimensions of these sieving spaces, at least along the length of the shafts 14, 15 and 16, can be varied by mounting spacers (not shown) between adjacent star wheels on the shafts.

In more detail, material below a first size, defined by sieving spaces of the star wheels 3a of the soil sieving conveyor 3, is permitted to fall down through the star wheels 3a to the ground. Material larger than the first size is transferred along the conveyor 3 for discharge on to the soil crumbling device 4. During movement along the soil sieving conveyor 3, the action of the star wheels 3a tends to cause a reduction in the size of the material, breaking down the material such that portions fall down through the sieving spaces to the ground. This breaking-down action can result in the size of the material being reduced to a level sufficient for the material to enter the sieving spaces, passing down through the soil sieving conveyor 3 to the ground.

Any material remaining above the first size is, however, discharged on to the crumbling device 4. Material which is above the first size, but below a second size defined by sieving spaces of the star wheels 4a of the soil crumbling device 4, falls down into the sieving spaces and is crushed by resilient fingers of the star wheels 4a.

The crushed material then falls down through the star wheels 4a on to the second soil sieving conveyor 5, which carries out a similar sieving action to the first conveyor 3.

Following working of the dug-up material using the conveyor 3, the crumbling device 4 and the second conveyor 5, a majority of the material has been finely crumbled and 'sieved', ready for planting. However, any large clods or hard items such as rocks or stones above a third size defined by an opening 17 of the star wheel members 4a is transferred along a length of the assembly, and discharged on to a lateral conveyor 18. The lateral conveyor 18 transports the material laterally and deposits it in ruts (not shown) made by wheels of the soil cultivator and stone/clod separator 7, into a collection area (not shown) on the cultivator/separator 7, or into a tractor trailer or the like.

It will be understood, however, that many soil clods above the second size will be broken down by the soil crumbling assembly 4 to a smaller size, through repeated impact of the fingers of the star wheels 4a against the clods. This will enable much of the large clod material to pass into the openings 17 and down through the soil crumbling assembly 4. Other, harder material above said third size, such as stones or rocks, will simply be discharged as described above.

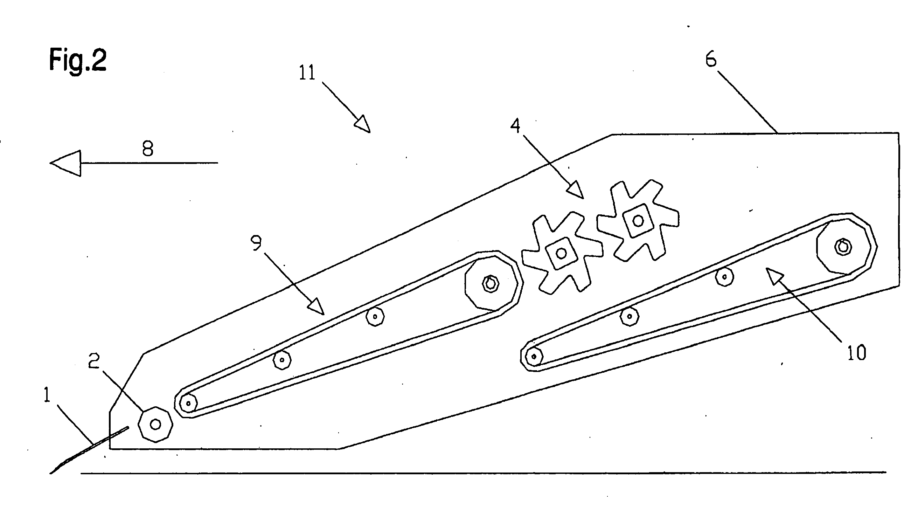

A further embodiment of the invention is shown in Figure 2, designated generally by reference 11, and differs from the stone and clod separator 7 shown in Figure 1 in that the soil sieving conveyors 3 and 5, consisting of rotatable star wheel members, are replaced by web type soil sieving conveyors 9 and 10. The illustration of the cultivator/separator 11 has been simplified somewhat compared to Figure 1, and thus a lateral conveyor, like the conveyor 18, has been omitted, for ease of illustration.

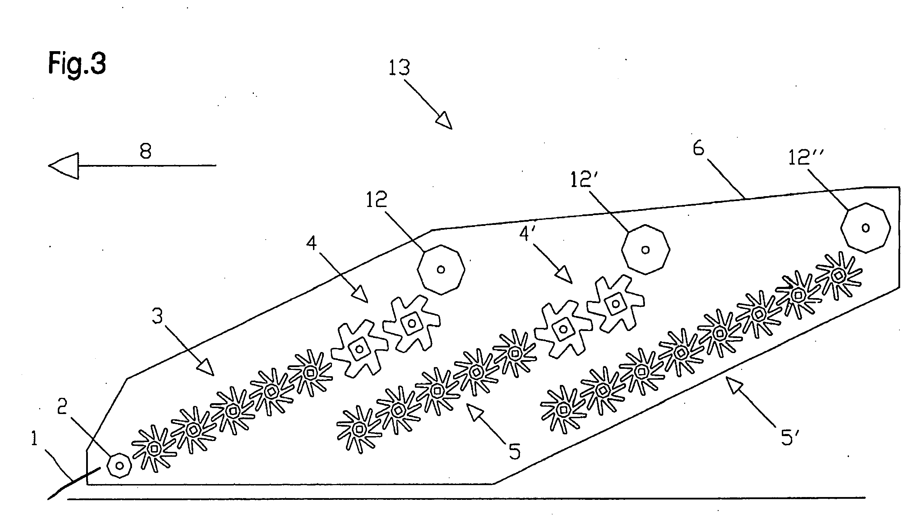

Turning now to Figure 3, there is shown a combined soil cultivator and stone/clod separator in accordance with a further alternative embodiment of the present invention, the combined soil cultivator and stone/clod separator indicated generally by reference numeral 13. The cultivator/separator 13 is essentially of similar structure to the cultivator/separator 7 shown in Figure 1, with certain additional components. Like components of the cultivator/separator 13 with the cultivator/separator 7 share the same reference numerals, with the addition of the suffix '.

The cultivator/separator 13 includes a first soil sieving conveyor 3, and a first soil crumbling assembly 4. A second soil sieving conveyor 5 is positioned to receive material discharged from the soil crumbling assembly 4 and carries out a sieving action on the material, allowing fine soil particles and small clods to fall back to the ground and delivering oversize clods to a second, downstream soil crumbling assembly 4' to be broken down. The cultivator/ separator 13 also includes a third soil sieving conveyor 5', which is positioned to receive material discharged from the second soil crumbling assembly 4'. The third soil sieving conveyor 5' carries out a final sieving action on the material, allowing fine soil particles and small clods discharged from the second crumbling assembly 4' to fall back to the ground.

The sieving spaces of the star wheels in the first soil crumbling assembly 4 are larger than those of the second soil crumbling assembly 4', so that the first assembly 4 carries out an initial crumbling action, discharging broken-down material on to the second soil sieving conveyor 5, for sieving and transport of larger material to the second soil crumbling assembly 4' for further working. It will therefore be understood that the first soil crumbling assembly 4 carries out a rough crumbling of oversized material, and that the second soil crumbling assembly 4' carries out a finer crumbling. Providing the cultivator/separator 13 with two such soil crumbling assemblies 4 and 4' maximises the volume of material that can be processed to a desired degree in a single pass, and enhances the quality of the finished, worked soil surface. It will be understood, however, that the soil sieving spaces of the first and second soil crumbling assemblies 4 and 4' may be the same, such that the cultivator/separator simply carries out a double-crumbling action.

The cultivator/separator 13 optionally includes a barrier comprising a roller 12 provided above and downstream of the soil crumbling assembly 4, which is arranged to increase the residence time of oversized clods as they pass over the top of the star wheel members of the assembly 4. Similar barriers having rollers 12' and 12" , respectively, are optionally provided above and downstream of the second soil crumbling assembly 4' and the third soil sieving conveyor 5'. Barriers of this type are disclosed in the above European Patent publication 1332656.

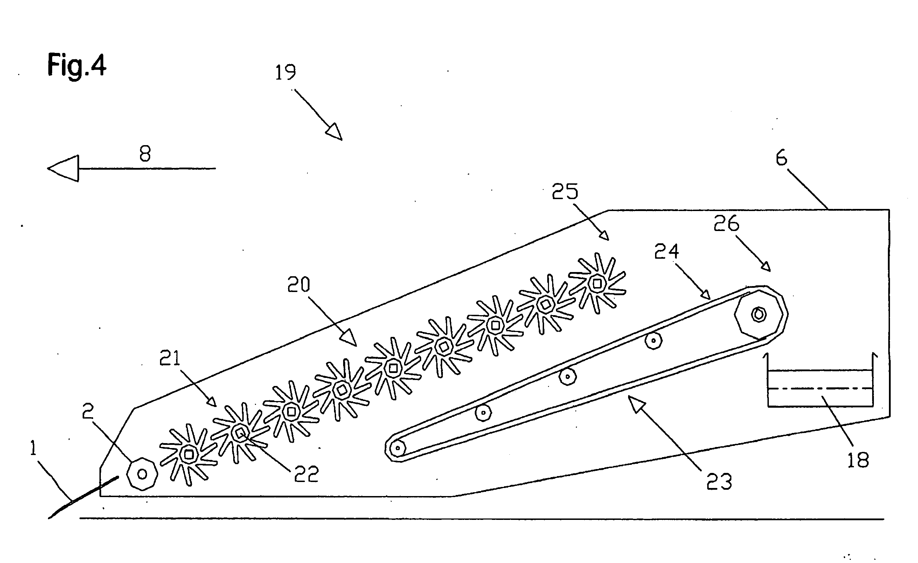

Turning now to Figure 4, there is shown a stone and/or clod separator in accordance with a further alternative embodiment of the present invention, the separator indicated generally by reference numeral 19. The separator 19 has a first soil sieving conveyor 20, of similar construction to the conveyor 3 of the cultivator and stone/clod separator 7 shown in Figure 1. Indeed, like components of the separator 19 with the cultivator 7 share the same reference numerals. The conveyor 20 comprises a number of arrays of star wheels 21 and, in use, material dug up by a share blade 1 is transferred on to the conveyor 20 by a roller 2.

The separator 19 also includes a second soil sieving conveyor 23, which takes the form of a web type soil sieving conveyor similar to the conveyors 9 and 10 of Figure 2. The web conveyor 23 overlaps a large portion of the first, star wheel conveyor 20 such that a large portion of the material sieved by the first conveyor 20, passing down through sieving spaces of the conveyor 20, falls on to the web conveyor 23. Apertures (not shown) in an endless belt 24 of the conveyor 23 carry out a further sieving action on the material falling on to the conveyor 23. Typically, the apertures in the belt 24 will define sieving spaces of smaller dimensions than sieving spaces defined by the star wheel arrays of the conveyor 20. In this way, a finer sieving action is carried out on the material falling from the star wheel conveyor 20 on to the web conveyor 23. However, the sieving spaces of the star wheel conveyor 20 and the web conveyor 23 may be of similar dimensions.

Any stones or clods which are too large to fall down through the sieving spaces of the first conveyor 20 are discharged from an end 25 of the star wheel conveyor 20 on to the web conveyor 23, are carried along the web conveyor 23, and then discharged from an end 26 of the conveyor 23 on to a lateral conveyor 18, for collection or deposit into wheel ruts. However, it will be appreciated that transit of the material along the web conveyor 23 may further break-down the material, the broken-down material falling down through the sieving spaces to the ground.

The separator 19 is of particular utility with relatively clod-free soils, such as sandy soils, in which there is no or little requirement to break down heavy soil clods. The primary function of the separator 19 is, therefore, to separate out stones from soil.

In a variation on the separator 19, sieving spaces of the final four arrays of star wheels 21 adjacent the end 25 the conveyor 20 are larger than those defined by the remainder of the arrays of star wheels 21. This is achieved by spacing the star wheels 21 in these final four arrays farther apart along respective shafts 22 of the conveyor 20, using suitable spacers on the shafts 22. In this fashion, the sieving spaces of the final four arrays are sufficiently large such that the star wheels in these arrays act to crumble large clods transferred along the conveyor 20 from the end adjacent the share blade 1. This broken-up material then passes down through the larger sieving spaces and on to the web conveyor 23 for subsequent sieving. Any especially large clods/stones are passed over the end 25 on to the web conveyor 23, and then into the discharge conveyor 18.

In this fashion, an initial sieving of the large volumes of soil transferred on to the conveyor 20 by the roller 2 is carried out by the star wheel arrays defining the smaller sieving spaces. This has the effect of first sieving out significant volumes of finer material through the conveyor 20 on to the ground or on to the web conveyor 23. Accordingly, when the larger clods reach the star wheel arrays defining the larger sieving spaces, the fingers of the star wheels 21 in these arrays are better able to work on the clods, to break the clods down for subsequent sieving on the web conveyor 23. It will therefore be understood that, in this variation, a cultivator and stone/clod separator 19 is provided which essentially operates in a similar fashion to the cultivators/separators 7, 11 and 13. The essential difference is that the final four star wheel arrays define a soil crumbling device, and thus the first soil sieving conveyor and the soil crumbling device includes star wheels of similar shape.

Whilst the cultivator and stone/clod separator 19 is described as having larger sieving spaces in the final four star wheel arrays, it will be appreciated that a larger or smaller number of arrays may have these larger spaces, depending upon factors including overall dimensions of the cultivator and stone/clod separator and the number of star wheel arrays.

Various modifications may be made to the foregoing without departing from the scope of the present invention as defined to the following claims.

For example, one or more of the above described features of the cultivators/separators 7, 11, 13 and/or 19 may be provided in combination in modifications to the cultivators/separators, or in further alternative embodiments. Thus, by way of example, the cultivator/separator 7 may include a roller like the roller 12 shown in Figure 3; or one of the soil sieving conveyors 3, 5 or 5' may be replaced with a web like the web 9 shown in Figure 2. In a further variation on the separator 19, the web conveyor 23 may be replaced with a star wheel type conveyor, such as the conveyor 20.

## Claims

1. A soil cultivator (7; 11; 13; 19) comprising:
a digging device (1);
a first soil sieving conveyor (3; 9; 20);
at least one soil crumbling assembly (4; 20); and
at least one further soil sieving conveyor (5; 5, 5'; 10; 23);
wherein the digging device is arranged to dig up material and to transfer the material rearwardly, relative to a direction of travel, to the first soil sieving conveyor;
and wherein the at least one soil crumbling assembly is positioned downstream of the first soil sieving conveyor, for receiving material from the first soil sieving conveyor;
**characterised in that** the at least one further soil sieving conveyor is positioned to receive substantially all of the material passing down through the at least one soil crumbling assembly.

2. A soil cultivator as claimed in claim 1, wherein the soil cultivator is a combined soil cultivator and stone/clod separator

3. A soil cultivator as claimed in claim 1 or claim 2, wherein the at least one further soil sieving conveyor is positioned to receive substantially all of the material passing down through and delivered rearwardly from the at least one soil crumbling assembly.

4. A soil cultivator as claimed in any preceding claim, wherein the first soil sieving conveyor is arranged to carry out a sieving action on material transferred to the conveyor by the digging device, and is arranged to transfer material above a first size along a length of the conveyor for discharge onto the soil crumbling assembly.

5. A soil cultivator as claimed in claim 4, wherein the first soil sieving conveyor is arranged to allow material below said first size to fall down through the conveyor back to the ground.

6. A soil cultivator as claimed in either of claims 4 or 5, wherein the first soil sieving conveyor defines a plurality of sieving spaces, the dimensions of each sieving space determining the maximum, first size of material permitted to fall down through the conveyor.

7. A soil cultivator as claimed in claim 6, wherein the first soil sieving conveyor is arranged to transport material which is oversized relative to the dimensions of said sieving spaces along a length of the first soil sieving assembly, and to discharge said material onto the at least one soil crumbling assembly.

8. A soil cultivator as claimed in any one of claims 4 to 7, wherein the at least one soil crumbling assembly is arranged to permit material below a second size, larger than said first size of material permitted to fall down through the first soil sieving conveyor, to pass down through the assembly.

9. A soil cultivator as claimed in claim 8, wherein the at least one soil crumbling assembly defines openings (17) through which material to be crumbled is received, and wherein the openings are sized to prevent entry of material above a third size, greater than said second size.

10. A soil cultivator as claimed in claim 9, wherein the at least one soil crumbling assembly is adapted to transfer material above said third size along a length of the assembly and to discharge the material from the assembly.

11. A soil cultivator as claimed in any preceding claim, wherein the soil crumbling assembly is positioned such that a main plane of the soil crumbling assembly is on the same plane as a main plane of the first soil sieving conveyor.

12. A soil cultivator as claimed in any preceding claim, wherein the at least one further soil sieving conveyor defines a plurality of sieving spaces, the dimensions of each sieving space determining the maximum size of material permitted to fall down through said conveyor, and wherein the at least one further soil sieving conveyor is arranged to exert a sieving action on material passing down through the at least one soil crumbling assembly, and to transfer material above said size along a length of the conveyor for discharge.

13. A soil cultivator separator as claimed in claim 12, when dependent upon claim 6, wherein the size of material which the sieving spaces permit to pass down through said at least one further soil sieving device is the same as the first size.

14. A soil cultivator as claimed in claim 12, when dependent upon claim 6,
wherein the size of material which the sieving spaces permit to pass down through said at least one further soil sieving device is smaller than said first size.

15. A combined soil cultivator and stone/clod separator as claimed in either of claims 11 or 12, when dependent on claim 2, wherein the at least one further soil sieving conveyor is arranged to discharge material above said size on to a discharge conveyor (18).

16. A soil cultivator (13) as claimed in any preceding claim, comprising a first soil crumbling assembly (14) positioned downstream of the first soil sieving conveyor (3); a second soil sieving conveyor (5) positioned to receive substantially all of the material passing down through and delivered rearwardly from the first soil crumbling assembly; a second soil crumbing assembly (4') positioned downstream of the second soil sieving conveyor, for receiving material from the second soil sieving conveyor; and a third soil sieving conveyor (5') positioned to receive substantially all of the material passing down through and delivered rearwardly from the second soil crumbling assembly.

17. A soil cultivator as claimed in claim 16, wherein the first soil crumbling assembly is arranged to carry out a first crumbling of the material and the second soil crumbling assembly to carry out a second, finer crumbling of the material.

18. A soil cultivator as claimed in any preceding claim, wherein the at least one soil sieving conveyor and the at least one soil crumbling assembly each comprise a plurality of rotatable star wheel members (3a, 5a, 4a).

19. A soil cultivator (19) as claimed in any preceding claim, wherein the first soil sieving conveyor (20) defines the soil crumbling assembly.

20. A method of cultivating soil and separating stones/clods, the method comprising the steps of:
digging-up material to be cultivated and from which stones and clods are to be separated and transferring the dug-up material on to a first soil sieving conveyor (3; 9; 20);
activating the first soil sieving conveyor to transfer the material to a soil crumbling assembly (4; 20) positioned downstream of the first sieving conveyor;
activating the at least one soil crumbling assembly; and
discharging substantially all of the material passing down through the at least one soil crumbling assembly onto an at least one further soil sieving conveyor (5; 5, 5'; 10; 23).

21. A method as claimed in claim 20, comprising discharging substantially all of the material passing down through and delivered rearwardly from the at least one soil crumbling assembly onto the at least one further soil sieving conveyor.

22. A method as claimed in claim 20, comprising forming a barrier (12; 12'; 12") to encourage material to pass down through the soil crumbling assembly.

## Patentansprüche

1. Bodenbearbeitungsvorrichtung (7; 11; 13; 19), umfassend:
eine Aushebeeinrichtung (1),
einen ersten Erdreichsiebe-Förderer (3; 9; 20);
wenigstens eine das Erdreich zermahlende Anordnung (4; 20); und
wenigstens einen weiteren Erdreichsiebe-Förderer (5; 5, 5'; 10; 23);
wobei die Aushebeeinrichtung angeordnet ist, um Material auszuheben und das Material, bezüglich einer Fahrtrichtung nach hinten, dem ersten Erdreichsiebe-Förderer zuzuführen;
und wobei die wenigstens eine das Erdreich zermahlende Anordnung dem ersten Erdreichsiebe-Förderer nachgelagert angeordnet ist, um Material von dem ersten Erdreichsiebe-Förderer aufzunehmen;
**dadurch gekennzeichnet,**
**dass** der wenigstens eine weitere Erdreichsiebe-Förderer angeordnet ist, um im Wesentlichen das gesamte durch die wenigstens eine das Erdreich zermahlende Anordnung hindurch herabfallende Material aufzunehmen.

2. Bodenbearbeitungsvorrichtung nach Anspruch 1, wobei die Bodenbearbeitungsvorrichtung eine kombinierte Bodenbearbeitungsvorrichtung und Vorrichtung zum Aussondern von Gesteins- und Erdklumpen ist.

3. Bodenbearbeitungsvorrichtung nach Anspruch 1 oder 2, wobei der wenigstens eine weitere Erdreichsiebe-Förderer angeordnet ist, um im Wesentlichen das gesamte durch die wenigstens eine das Erdreich zermahlende Anordnung hindurch herabfallende und nach hinten abgeführte Material aufzunehmen.

4. Bodenbearbeitungsvorrichtung nach einem der vorhergehenden Ansprüche, wobei der erste Erdreichsiebe-Förderer angeordnet ist, um an durch die Aushebeeinrichtung dem Förderer zugeführtem Material einen Siebvorgang auszuführen, und angeordnet ist, um Material oberhalb einer ersten Größe entlang einer Länge des Förderers auf die das Erdreich zermahlende Anordnung zuzuführen.

5. Bodenbearbeitungsvorrichtung nach Anspruch 4, wobei der erste Erdreichsiebe-Förderer angeordnet ist, dass Material unterhalb der genannten ersten Größe durch den Förderer hindurch zurück auf den Boden herabfallen kann.

6. Bodenbearbeitungsvorrichtung nach Anspruch 4 oder 5, wobei der erste Erdreichsiebe-Förderer eine Mehrzahl von Siebabständen definiert, deren jeweilige Abmessungen die maximale erste Größe des Materials bestimmen, das durch den Förderer herabfallen darf.

7. Bodenbearbeitungsvorrichtung nach Anspruch 6, wobei der erste Erdreichsiebe-Förderer angeordnet ist, um Material oberhalb der durch die Siebabstände bestimmten Größe entlang der Länge des ersten Erdreichsiebe-Förderers zu fördern und das Material auf die wenigstens eine das Erdreich zermahlende Anordnung zu entladen.

8. Bodenbearbeitungsvorrichtung nach einem der Ansprüche 4 bis 7, wobei die wenigstens eine das Erdreich zermahlende Anordnung angeordnet ist, dass Material unterhalb einer zweiten Größe, aber oberhalb der ersten Größe des Materials, durch den ersten Erdreichsiebe-Förderer hindurch herabfallen und durch die Anordnung herab gelangen kann.

9. Bodenbearbeitungsvorrichtung nach Anspruch 8, wobei die wenigstens eine das Erdreich zermahlende Anordnung Öffnungen (17) definiert, durch die zu zermahlendes Material aufgenommen wird, und wobei die Öffnungen bemessen sind, um die Aufnahme von Material oberhalb einer dritten Größe, die die zweite Größe übersteigt, zu verhindern.

10. Bodenbearbeitungsvorrichtung nach Anspruch 9, wobei die wenigstens eine das Erdreich zermahlende Anordnung ausgebildet ist, Material oberhalb der genannten dritten Größe entlang der Länge der Anordnung zu fördern und das Material aus der Anordnung zu entladen.

11. Bodenbearbeitungsvorrichtung nach einem der vorhergehenden Ansprüche, wobei die das Erdreich zermahlende Anordnung angeordnet ist, dass eine Hauptebene der das Erdreich zermahlenden Anordnung auf der selben Ebene mit einer Hauptebene des ersten Erdreichsiebe-Förderers liegt.

12. Bodenbearbeitungsvorrichtung nach einem der vorhergehenden Ansprüche, wobei der wenigstens eine weitere Erdreichsiebe-Förderer eine Mehrzahl von Siebabständen definiert, deren jeweilige Abmessungen die maximale Größe des Materials bestimmen, das durch den genannten Förderer hindurch herabfallen darf, und wobei der wenigstens eine weitere Erdreichsiebe-Förderer angeordnet ist, um auf durch die wenigstens eine das Erdreich zermahlende Anordnung hindurch herabfallendes Material einen Siebvorgang auszuüben, und Material oberhalb der genannten Größe entlang der Länge des Förderers zum Entladen zu fördern.

13. Bodenbearbeitungsvorrichtung nach Anspruch 12, soweit rückbezogen auf Anspruch 6, wobei die Größe des Materials, bei der die Siebabstände das Hindurchfallen durch die wenigstens eine weitere Erdreichsiebe-Vorrichtung erlauben, dieselbe ist wie die ersten Größe.

14. Bodenbearbeitungsvorrichtung nach Anspruch 12, soweit rückbezogen auf Anspruch 6, wobei die Größe des Materials, bei der die Siebabtände das Hindurchfallen durch die wenigstens eine weitere Erdreichsiebe-Vorrichtung erlauben, kleiner ist als die erste Größe.

15. Kombinierte Bodenbearbeitungsvorrichtung und Vorrichtung zum Aussondern von Gesteins- und Erdklumpen nach Anspruch 11 oder 12, soweit rückbezogen auf Anspruch 2, wobei der wenigstens eine weitere Erdreichsiebe-Förderer angeordnet ist, um Material oberhalb der Größe auf einen Entlade-Förderer (18) zu entladen.

16. Bodenbearbeitungsvorrichtung (13) nach einem der vorhergehenden Ansprüche, umfassend eine erste das Erdreich zermahlende Anordnung (14), die dem ersten Erdreichsiebe-Förderer (3) nachgelagert angeordnet ist; einen zweiten Erdreichsiebe-Förderer (5), der angeordnet ist, dass er im Wesentlichen das gesamte durch die erste das Erdreich zermahlende Anordnung hindurch herabfallende und nach hinten abgelieferte Material aufnimmt; eine zweite das Erdreich zermahlende Anordnung (4'), die dem zweiten Erdreichsiebe-Förderer nachgelagert angeordnet ist, um Material von dem zweiten Erdreichsiebe-Förderer aufzunehmen; und einen dritten Erdreichsiebe-Förderer (5'), der angeordnet ist, dass er im Wesentlichen das gesamte durch die zweite das Erdreich zermahlende Anordnung hindurch herabfallende und nach hinten abgelieferte Material aufnimmt.

17. Bodenbearbeitungsvorrichtung nach Anspruch 16, wobei die erste das Erdreich zermahlende Anordnung angeordnet ist, um das Material ein erstes Mal zu mahlen, und die zweite das Erdreich zermahlende Anordnung angeordnet ist, um das Material ein zweites Mal zu mahlen.

18. Bodenbearbeitungsvorrichtung nach einem der vorhergehenden Ansprüche, wobei der wenigstens eine Erdreichsiebe-Förderer und die wenigstens eine das Erdreich zermahlende Anordnung jeweils eine Mehrzahl rotierbarer Sternradglieder (3a, 5a; 4a) umfassen.

19. Bodenbearbeitungsvorrichtung (19) nach einem der vorhergehenden Ansprüche, wobei der erste Erdreichsiebe-Förderer (20) die das Erdreich zermahlende Anordnung definiert.

20. Verfahren zur Bodenbearbeitung und zum Aussondern von Gesteins-und Erdklumpen, umfassend die Schritte:
Ausheben von Material, das zu bearbeitenden ist und aus dem Gesteins- und Erdklumpen auszusondern sind, und Fördern des ausgehobenen Materials auf einen ersten Erdreichsiebe-Förderer (3; 9; 20),
Betätigen des ersten Erdreichsiebe-Förderers, das Material zu einer das Erdreich zermahlenden Anordnung (4; 20) zu fördern, die dem ersten Erdreichsiebe-Förderer nachgelagert angeordnet ist,
Betätigen der wenigstens einen das Erdreich zermahlenden Anordnung; und
Entladen im Wesentlichen des gesamten durch die wenigstens eine das Erdreich zermahlende Anordnung hindurch herabfallenden Materials auf einen wenigstens einen weiteren Erdreichsiebe-Förderer (5; 5, 5'; 10; 23).

21. Verfahren nach Anspruch 20, umfassend das Entladen im Wesentlichen des gesamten durch die wenigstens eine das Erdreich zermahlende Anordnung hindurch herabfallenden und nach hinten abgeführten Materials auf den wenigstens einen weiteren Erdreichsiebe-Förderer.

22. Verfahren nach Anspruch 20, umfassend das Ausbilden einer Barriere (12; 12'; 12"), die das Material zum Hindurchfallen durch die das Erdreich zermahlende Anordnung leitet.

## Revendications

1. Cultivateur (7 ; 11 ; 13 ; 19) comprenant :
un dispositif excavateur (1) ;
un premier transporteur tamiseur de sol (3 ; 9 ; 20) ;
au moins un ensemble de désagrégation de sol (4 ; 20) ; et
au moins un transporteur tamiseur de sol supplémentaire (5 ; 5, 5' ; 10 ; 23) ;
dans lequel le dispositif excavateur est agencé pour déterrer de la matière et pour transférer la matière vers l'arrière, par rapport à une direction de déplacement, au premier transporteur tamiseur de sol ;
et dans lequel l'au moins un ensemble de désagrégation de sol est positionné en amont du premier transporteur tamiseur de sol, pour recevoir la matière à partir du premier transporteur tamiseur de sol ;
**caractérisé en ce que** l'au moins un transporteur tamiseur de sol supplémentaire est positionné pour recevoir sensiblement toute la matière passant vers le bas à travers l'au moins un ensemble de désagrégation de sol.

2. Cultivateur selon la revendication 1, dans lequel le cultivateur est une association de cultivateur et de séparateur de pierres/mottes de terre.

3. Cultivateur selon la revendication 1 ou la revendication 2, dans lequel l'au moins un transporteur tamiseur de sol supplémentaire est positionné pour recevoir sensiblement tout la matière passant vers le bas à travers et distribué vers l'arrière à partir de l'au moins un ensemble de désagrégation de sol.

4. Cultivateur selon une quelconque revendication précédente, dans lequel le premier transporteur tamiseur de sol est agencé pour réaliser une action de tamisage sur la matière transféré au transporteur par le dispositif excavateur, et est agencé pour transférer de la matière dont la taille est supérieure à une première taille sur une longueur du transporteur pour être déchargé sur l'ensemble de désagrégation de sol.

5. Cultivateur selon la revendication 4, dans lequel le premier transporteur tamiseur de sol est agencé pour permettre à de la matière dont la taille est inférieure à ladite première taille de tomber vers le bas à travers le transporteur pour être remis sur le sol.

6. Cultivateur selon l'une quelconque des revendications 4 ou 5, dans lequel le premier transporteur tamiseur de sol définit une pluralité d'espaces de tamisage, les dimensions de chaque espace de tamisage déterminant la première taille maximum de matière autorisée à tomber vers le bas à travers le transporteur.

7. Cultivateur selon la revendication 6, dans lequel le premier transporteur tamiseur de sol est agencé pour transporter de la matière qui est surdimensionné par rapport aux dimensions desdits espaces de tamisage sur une longueur du premier ensemble de tamisage de sol, et pour décharger ladite matière sur l'au moins un ensemble de désagrégation de sol.

8. Cultivateur selon l'une quelconque des revendications 4 à 7, dans lequel l'au moins un ensemble de désagrégation de sol est agencé pour permettre à de la matière dont la taille est inférieure à une deuxième taille, qui est supérieure à ladite première taille de la matière autorisée à tomber vers le bas à travers le premier transporteur tamiseur de sol, de passer vers le bas à travers l'ensemble.

9. Cultivateur selon la revendication 8, dans lequel l'au moins un ensemble de désagrégation de sol définit des ouvertures (17) à travers lesquelles de la matière destinée à être désagrégée est reçue, et dans lequel les ouvertures sont dimensionnées pour empêcher l'entrée de matière dont la taille est supérieure à une troisième taille, qui est supérieure à ladite deuxième taille.

10. Cultivateur selon la revendication 9, dans lequel l'au moins un ensemble de désagrégation de sol est adapté pour transférer de la matière dont la taille est supérieure à ladite troisième taille sur une longueur de l'ensemble et pour décharger la matière à partir de l'ensemble.

11. Cultivateur selon l'une quelconque des revendications précédentes, dans lequel l'ensemble de désagrégation de sol est positionné de sorte qu'un plan principal de l'ensemble de désagrégation de sol soit sur le même plan qu'un plan principal du premier transporteur tamiseur de sol.

12. Cultivateur selon l'une quelconque des revendications précédentes, dans lequel l'au moins un transporteur tamiseur de sol supplémentaire définit une pluralité d'espaces de tamisage, les dimensions de chaque espace de tamisage déterminant la taille maximum de matière autorisé à tomber vers le bas à travers ledit transporteur, et dans lequel l'au moins un transporteur tamiseur de sol supplémentaire est agencé pour exercer une action de tamisage sur de la matière passant vers le bas à travers l'au moins un ensemble de désagrégation de sol, et pour transférer la matière dont la taille est supérieure à ladite taille sur une longueur du transporteur pour être déchargée.

13. Cultivateur séparateur selon la revendication 12, lorsqu'elle dépend de la revendication 6, dans lequel la taille de matière que les espaces de tamisage laissent passer vers le bas à travers ledit au moins un dispositif de tamisage de sol supplémentaire est identique à la première taille.

14. Cultivateur selon la revendication 12, lorsqu'elle dépend de la revendication 6, dans lequel la taille de matière que les espaces de tamisage laissent passer vers le bas à travers ledit au moins un dispositif de tamisage de sol supplémentaire est inférieure à ladite première taille.

15. Association de cultivateur et séparateur de pierres/mottes de terre selon une quelconque des revendications 11 ou 12, lorsqu'elles dépendent de la revendication 2, dans lequel l'au moins un transporteur tamiseur de sol supplémentaire est agencé pour décharger de la matière dont la taille est supérieure à ladite taille sur un transporteur de décharge (18).

16. Cultivateur (13) selon une quelconque revendication précédente, comprenant un premier ensemble de désagrégation de sol (14) positionné en amont du premier transporteur tamiseur de sol (3) ; un deuxième transporteur tamiseur de sol (5) positionné pour recevoir sensiblement toute la matière passant vers le bas à travers et distribuée vers l'arrière à partir du premier ensemble de désagrégation de sol ; un second ensemble de désagrégation de sol (4') positionné en amont du deuxième transporteur tamiseur de sol, pour recevoir la matière à partir du deuxième transporteur tamiseur de sol ; et un troisième transporteur tamiseur de sol (5') positionné pour recevoir sensiblement toute la matière passant vers le bas à travers et distribué vers l'arrière à partir du second ensemble de désagrégation de sol.

17. Cultivateur selon la revendication 16, dans lequel le premier ensemble de désagrégation de sol est agencé pour réaliser une première désagrégation de matière et le second ensemble de désagrégation de sol pour réaliser une seconde désagrégation plus fine de matière.

18. Cultivateur selon l'une quelconque des revendications précédentes, dans lequel l'au moins un transporteur tamiseur de sol et l'au moins un ensemble de désagrégation de sol comprennent chacun une pluralité d'éléments rotatifs de roue en étoile (3a, 5a ; 4a).

19. Cultivateur (19) selon l'une quelconque des revendications précédentes, dans lequel le premier transporteur tamiseur de sol (20) définit l'ensemble de désagrégation de sol.

20. Procédé de culture du sol et de séparation de pierres/mottes de terre, le procédé comprenant les étapes consistant à :
Déterrer de la matière destiné à être cultivée et à partir de laquelle des pierres et des mottes de terre doivent être séparées et transférer la matière déterré sur un premier transporteur tamiseur de sol (3 ; 9 ; 20) ;
activer le premier transporteur tamiseur de sol pour transférer la matière à un ensemble de désagrégation de sol (4 ; 20) positionné en amont du premier transporteur tamiseur ;
activer l'au moins un ensemble de désagrégation de sol ; et
décharger sensiblement toute la matière passant vers le bas à travers l'au moins un ensemble de désagrégation de sol sur au moins un transporteur tamiseur de sol supplémentaire (5 ; 5, 5' ; 10 ; 23).

21. Procédé selon la revendication 20, comprenant l'étape consistant à décharger sensiblement toute la matière passant vers le bas à travers et distribuée vers l'arrière à partir de l'au moins un ensemble de désagrégation de sol sur l'au moins un transporteur tamiseur de sol supplémentaire.

22. Procédé selon la revendication 20, comprenant l'étape consistant à former une barrière (12 ; 12' ; 12") pour encourager la matière à passer vers le bas à travers l'ensemble de désagrégation de sol.
